# EUROPEAN PATENT APPLICATION

(11) **EP 0 684 195 A1**
(43) Date of publication of application: **29.11.1995**
(21) Application number: 95201337.3
(22) Date of filing: 22.05.1995
(51) Int. Cl.: B65G 47/38, B65G 17/32, B65B 23/08

(54) **Apparatus for releasing articles from the article holders of a conveyor at a desired position**

(30) Priority: 27.05.1994 NL 9400878
(71) Applicant: FPS Food Processing Systems B.V., NL-3771 VE Barneveld (NL)
(72) Inventor: van der Schoot, Jelle, NL-7121 AL Aalten (NL)
(74) Representative: Smulders, Theodorus A.H.J., Ir.

(57) **Abstract**

An apparatus comprising a conveyor having a number of article holders conveyable in the direction of travel, each article holder comprising an operating cam by means of which the article holder can be brought from a retaining position into a releasing position, the apparatus comprising a number of stops, each stop being movable substantially perpendicularly to the direction of travel under the influence of an exciting element, which stops in a downward position operate the operating cams and in an upward position allow the operating cams to pass freely, the stops being arranged for displacement in the direction of travel depending on the speed of the conveyor, as a result of which the stop point between the operating cam and the stop and hence the point at which the article in the relevant holder is released is displaceable, the exciting elements being fixedly arranged and each comprising a plunger, movable perpendicularly to the direction of travel, by means of which the position of a corresponding stop can be controlled.

## Description

The invention relates to an apparatus as described in the preamble of claim 1.

Such an apparatus is known from US Patent US-A-3 224 579.

In this known apparatus, the exciting elements are formed by electromagnets. The stops are formed by the armatures of the electromagnets. To effect the displacement of the stops, the electromagnets are arranged for displacement in the direction of travel. A drawback of the displaceable arrangement of the electromagnets is formed by the fact that the feeder cables of the electromagnets have to move along with the displacement of the electromagnets. Hence, the electric cable work should be flexibly provided and there is a chance that cable break occurs due to movement of the cables.

Another drawback of the known apparatus is that the stops are formed by the armatures of the electromagnets. The stops are always laterally loaded by the operating cams of the article holders that strike them very frequently. The recurrent impacts require that the electromagnets and the armatures thereof are of a heavy construction, as a consequence of which the electromagnets are costly. An additional consequence is that a displacing mechanism, by means of which the electromagnets are displaced, should be of a heavy construction in view of the mass of the electromagnets.

In order to remove these drawbacks, the apparatus is characterized by the features as described in claim 1.

An apparatus of such design has the advantage that because the exciting elements are fixedly arranged, the feeder lines to the exciting elements can be fixedly provided. Cable work or for instance pneumatic or hydraulic lines are therefore fixedly arranged and not subject to wear through movement thereof. Another advantage is that only the stops need be movably arranged. Because the stops can be of light design, only a light construction, such as for instance a light electromotor that is controlled depending on the speed of the conveyor, needs to be applied for the displacing mechanism by means of which the stops can be displaced in the direction of travel.

Because the position of the stops is displaceable relative to that of the plungers, and because a plunger must be capable of controlling the corresponding stop in each possible position thereof, the difference in position between a plunger and the corresponding stop should be bridged.

To that end, in further elaboration of the invention, the apparatus is characterized by the features of claim 2.

In an alternative further elaboration of the invention for the solution to the above-outlined part of the problem, the apparatus is characterized by the features of claim 3.

Due to the presence of the contact face extending in the direction of travel, the difference in position between the stop and the plunger is bridged. The maximum difference in position corresponds to the maximum horizontal distance travelled by the article in the ballistic trajectory described by the article after its release from an article holder that moves along at the maximum speed. Consequently, a specific article-receiving position is always, i.e. independently of the speed of the conveyor, associated with the same stop, plunger and exciting element corresponding to this receiving position. In this manner, it can be effected with a relatively simple exciting element control that the articles are received at a desired position, while the speed of travel of the conveyor can be taken into account.

If, at maximum speed of travel of the article holders, the horizontal distance travelled by the article in the ballistic trajectory thereof exceeds the distance between the holders mutually, viewed in the direction of travel, the apparatus in further elaboration is characterized by the features of claim 4. Because the contact faces are laterally staggered in the direction of travel, the distance between the article holders can be kept small all the same, as a result of which the capacity of the conveyor is not unnecessarily reduced.

The displacement of the stops can efficiently be effected by accommodating them together in a movably arranged frame. The position of the movably arranged frame can readily be controlled by for instance a single electromotor, stepping motor, hydromotor or a like motor.

It is clear that the exciting elements can be designed as electromagnets, the plungers being formed by the armatures of the electromagnets. The fixed arrangement also enables designing the exciting elements as hydraulic or pneumatic piston/cylinder assemblies, the plungers being formed by the pistons or the cylinders of these assemblies.

To explain the invention, an exemplary embodiment of the apparatus will be described hereinafter with reference to the accompanying drawings.
Fig. 1 is a side elevation of an exemplary embodiment of the apparatus;
Fig. 2 is a sectional view taken on line II-II in Fig. 1; and

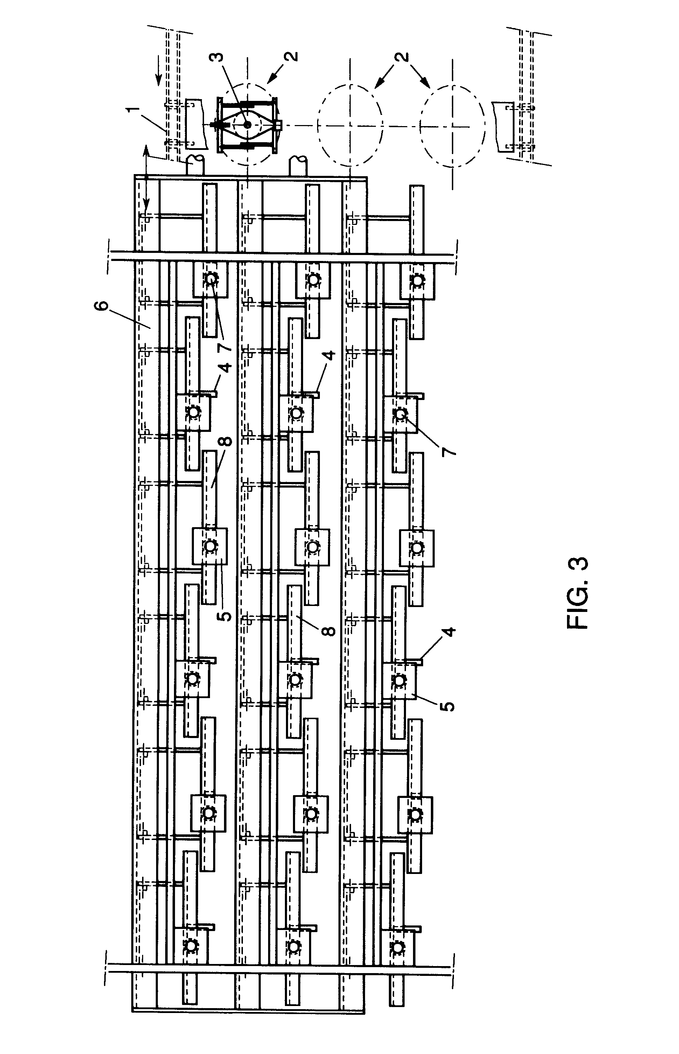

Fig. 3 is a top plan view of the exemplary embodiment shown in Figs 1 and 2.

The exemplary embodiment shown comprises a conveyor 1 having a number of article holders 2 conveyable in the direction of travel. Each article holder comprises an operating cam 3 by means of which the article container 2 can be brought from a position wherein the article V is retained, into a position wherein the article V is released. The article holders 2 are designed and arranged to release the articles V in the position for releasing the article V. The apparatus further comprises a number of stops 4. Under the influence of an exciting element 5, the stops 4 are movable substantially perpendicularly to the direction of travel of the conveyor 1. In a downward position, the stops 4 operate the operating cams 3. In an upward position of the stops 4, the operating cams 3 can freely pass the stops. The stops 4 are arranged for movement in the direction of travel of the conveyor 1, depending on the speed of the conveyor 1, as a result of which the stop point between the operating cam 4 and the stop 3 and hence the point at which the article in the relevant holder is released is displaceable.

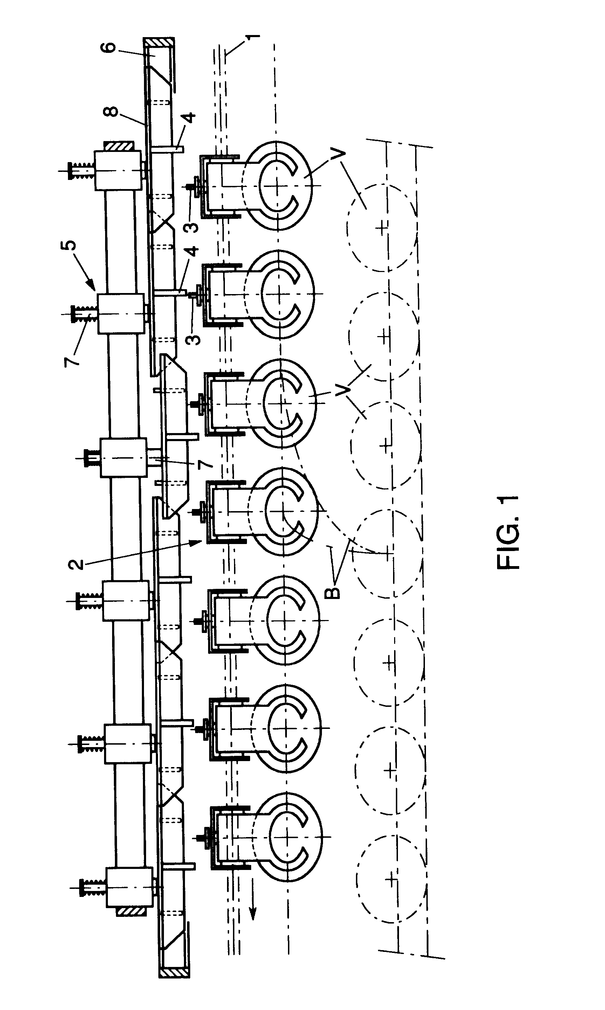

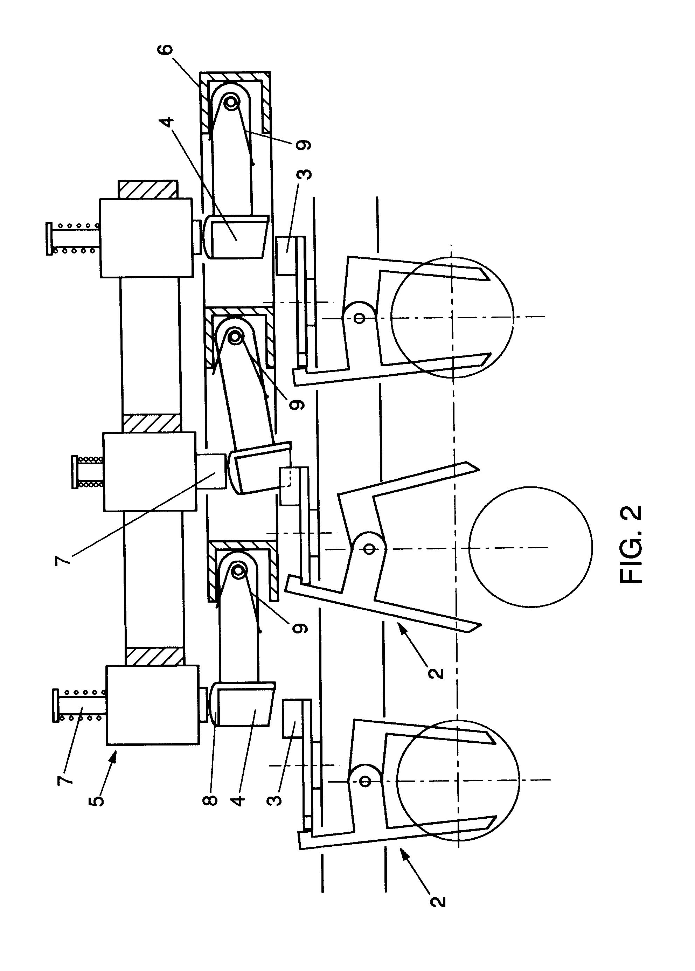

The invention is characterized in that the exciting elements 5 by means of which the position of the stops 4 is controlled are fixedly arranged and each comprise a plunger 7 by means of which the position of the stop 4 can be controlled. When an article holder 2 is opened, the article V is released and it travels a ballistic trajectory B. The starting point of this ballistic trajectory B should be chosen so that its finishing point is at the position where the article V is to be picked up. The position of the starting point therefore depends on the form of the ballistic trajectory B, which is in turn dependent on the speed of the conveyor 1. If the speed of the conveyor 1 is high, the starting point of the ballistic trajectory B will be further to the right in Fig. 1; however, if this speed is low, the starting point of the ballistic trajectory B will be further to the left in Fig. 1. The starting point of the ballistic trajectory B depends on the moment at which the operating cam 3 touches the stop 4. The position of the stop 4 depends on the speed of the conveyor 1. The stops 4 are accommodated in a frame 6 that is arranged for movement in the direction of travel. The frame can be displaced through a distance that is at least equal to the horizontal distance travelled by the article in a ballistic trajectory B when it is released from a holder which moves along at the maximum speed of travel of the conveyor 1. The exciting elements 5, comprising a plunger 7 that is movable perpendicularly to the direction of travel and by means of which the position of the corresponding stop 4 can be controlled, are not always located perpendicularly above the stop 4. After all, the plunger 7 is arranged so as to be fixed in the direction of travel and forms a part of the exciting element 5, whereas the stop 4 is arranged for movement in the direction of travel. Hence, the difference in position between the plunger 5 and the stop 4 will have to be bridged, which is effected through a contact face 8 which may on the one hand be connected with the plunger 7 or, in an alternative embodiment, may be connected with the stop 4. The length of the contact face 8 corresponds to the maximum horizontal distance travelled by the article in its ballistic trajectory B. In the exemplary embodiment shown, the horizontal distance travelled by the article V in the ballistic trajectory B exceeds the mutual distance between the article holders 2, viewed in the direction of travel. Hence, in this exemplary embodiment the contact faces 8 are laterally staggered in the direction of travel. This permits the distance between the article holders 2 to be kept small all the same, as a result of which the capacity of the conveyor 1 is not unnecessarily reduced. As is clearly shown in Fig. 2, the stops 4 are pivoted to the frame 6. The stops 4 are biased in their upward position by for instance a spring 9 and can be brought into the downward position under the downward force exerted thereon by the plunger 7. The invention is particularly intended for releasing eggs, fruits or like, relatively vulnerable articles V. It is understood that the invention is not limited to the exemplary embodiment described, but that various modifications are possible within the purview of the invention.

## Claims

1. An apparatus comprising a conveyor (1) having a number of article holders (2) conveyable in the direction of travel, each article holder (2) comprising an operating cam (3) by means of which the article holder (2) can be brought from a position wherein the article (V) is retained into a position wherein the article (V) is released, the holders (2) being designed and arranged to release the articles in the position for releasing the articles (V), the apparatus comprising a number of stops (4), each stop being movable substantially perpendicularly to the direction of travel under the influence of an exciting element (5), said stops (4) in a downward position operating the operating cams (3) and in an upward position allowing the operating cams (3) to pass freely, the stops (4) being arranged for displacement in the direction of travel depending on the speed of the conveyor (1), as a result of which the stop point between the operating cam (3) and the stop (4) and hence the point at which the article in the relevant holder (2) is released is displaceable, characterized in that the exciting elements (5) are fixedly arranged and each comprise a plunger (7) by means of which the position of a corresponding stop (4) can be controlled.

2. An apparatus according to claim 1, characterized in that the or each stop (4) comprises a contact face (8) extending in the direction of travel and having a length corresponding to the horizontal distance travelled by the article (V) in a ballistic trajectory (B) after its release by a holder (2) having the maximum speed of travel.

3. An apparatus according to claim 1, characterized in that each plunger (7) comprises a contact face (8) extending in the direction of travel and having a length corresponding to the horizontal distance travelled by the article (V) in a ballistic trajectory (B) after its release by a holder (2) having the maximum speed of travel.

4. An apparatus according to claim 2 or 3, characterized in that if the length of the contact faces (8) exceeds the mutual distance of the article holders, at least the contact faces (8) are laterally staggered relative to each other and relative to the direction of travel.

5. An apparatus according to any one of the preceding claims, characterized in that the stop or all stops (4) is or are accommodated in a single frame (6) arranged for displacement in the direction of travel.

6. An apparatus according to any one of the preceding claims, characterized in that the exciting elements (5) are electromagnets and that the plungers (7) are formed by the armatures of the electromagnets.

7. An apparatus according to any one of claims 1-5, characterized in that the exciting elements (5) are hydraulic or pneumatic piston/cylinder assemblies and that the plungers (7) are formed by the pistons or the cylinders of said assemblies.
